# EUROPEAN PATENT APPLICATION

(11) **EP 4 417 812 A1**
(43) Date of publication of application: **21.08.2024**
(21) Application number: 23156885.8
(22) Date of filing: 15.02.2023
(51) Int. Cl.: F03D 17/00, F03D 80/60

(54) **METHOD FOR OPERATING A COOLING SYSTEM IN A NACELLE OF A WIND TURBINE AND WIND TURBINE**

(71) Applicant: Siemens Gamesa Renewable Energy A/S, 7330 Brande (DK)
(72) Inventor: Jensen, Jens Bomholt, 8700 Horsens (DK)
(74) Representative: SGRE-Association

(57) **Abstract**

Method for operating a cooling system (12) in a nacelle (9) of a wind turbine (1), wherein the wind turbine (1) comprises a generator (5) and at least one transformer (11) located in the nacelle (9), wherein the cooling system (12) comprises
- an air-cooling subsystem (14) for cooling at least the generator (5), comprising an inflow unit (15) for drawing inflow ambient air (36) into the nacelle (9),
- temperature sensors (33, 34, 35) for measuring the temperature of the ambient air and at least one temperature in the nacelle (9), and
- a control device (31) for controlling the operation of the cooling system (12) using the measured temperatures, wherein the control device (31),
- a temperature difference between the ambient air and at least a part of the components in the nacelle (9) is determined from measured temperature values of the temperature sensors (33, 34, 35), and
- if the temperature difference fulfils a exchange criterion indicating possible condensation of air humidity on at least one of the part of the components in the nacelle (9), the cooling system (12) is controlled to temper the inflow ambient air (36) by exchanging heat between at least one of the components in the nacelle (9) and the ambient air to reduce the temperature difference.

## Description

The invention concerns a method for operating a cooling system in a nacelle of a wind turbine, wherein the wind turbine comprises a generator and at least one transformer located in the nacelle, wherein the cooling system comprises
- an air-cooling subsystem for cooling at least the generator, comprising an inflow unit for drawing inflow ambient air into the nacelle,
- temperature sensors for measuring the temperature of the ambient air and at least one temperature in the nacelle, and
- a control device for controlling the operation of the cooling system using the measured temperatures.

The invention further concerns a wind turbine, wherein such a method is implemented.

Wind turbines are well-known and may, for example be used as a source for renewable energy. Common wind turbines comprise multiple wind turbines blades, which are mounted to a rotor hub. The rotor hub is coupled to a rotor of a generator housed in a nacelle of the wind turbine, which is usually provided on top of a tower. Other equipment, for example converters, transformers, electrical cabinets and the like, is usually also housed in the nacelle. The generator as well as further components, for example the transformers, heat up when used and thus require cooling.

In the state of the art, cooling systems using ambient air to cool the generator have already been proposed. Here, air is drawn into the nacelle through an inlet unit, which at least comprises openings such that ambient air may be guided into the nacelle. Often, blowers/ventilators are used to blow the air against generator components to be cooled, for example coil overhangs and/or through the air gap between rotor and stator. In some configurations, in addition to the air-cooling subsystem, further liquid-based cooling subsystems (liquid-cooling subsystems) using a liquid coolant may be provided, for example for cooling the transformer, the converter or further components. Of course, also the air-cooling subsystem may cool further components, for example electrical cabinets.

EP 2 806 542 A1 discloses an air flow control arrangement for a direct-drive wind turbine with a generator comprising a rotor and a stator. An inflow fan may be used to draw air into the interior of the nacelle. An outflow fan creates suction to draw the air through gaps between the winding overhangs of the generator and through the air-gap between magnet poles and windings of the generator. The air exits the nacelle via an exit duct.

EP 3 279 469 A1 discloses a wind turbine with improved cooling. Here, a cooling system for cooling the generator is provided, wherein cooling air may be taken in through a front assembly air intake, but also from the tower. The tower air may in particular be useful for reducing the humidity of the cooling air.

Nacelles having openings to ambient air may be problematic when a wind turbine is not in operation, since the change of temperatures in the nacelle and its components leads to a risk of condensation of humid air inside the nacelle and the generator. In particular, if the dewpoint is passed, which depends on pressure, humidity, and temperature of the air and the respective structures sensitive to condensation, water may condensate, such that corrosion may occur and the risk of a short-circuit in the electrical system increases. Here, the temperature of the ambient air depends on climatic parameters and varies in a day cycle, while temperatures in the nacelle, in particular temperatures of condensation-sensitive structures, also depend on heat or cold stored in the wind turbine. For example, a transformer may comprise a large amount of oil, keeping nacelle components warm after a shutdown or cold while the ambient air is already heating up during day break. To solve this problem, it has been proposed to dehumidify inflow ambient air, in particular in the inflow unit of the air-cooling subsystem, for example by removing water in a de-humidifying process.

It is an object of the invention to provide improved operation of cooling systems in wind turbines, in particular regarding condensation and/or while no power is produced in the wind turbine.

This object is achieved by providing a method and a wind turbine according to the independent claims. Advantageous embodiments are describe by the dependent claims.

In a method as initially described, in the control device, according to the invention, the following steps are performed:
- a temperature difference between the ambient air and at least a part of the components in the nacelle is determined from measured temperature values of the temperature sensors, and
- if the temperature difference fulfils a exchange criterion indicating possible condensation of air humidity on at least one of the part of the components in the nacelle, the cooling system is controlled to temper the inflow ambient air by exchanging heat between at least one of the components in the nacelle and the ambient air to reduce the temperature difference.

This tempering, that is, warming or cooling the inflow ambient air, may be performed until the exchange criterion or a stopping criterion is no longer fulfilled. Most preferably, the tempering of the ambient air depending on the temperature difference, is, in particular only, performed when the wind turbine is shut down, in particular not converting mechanical power from wind into electrical power by the generator. Hence, the proposed method can most advantageously be applied in situations where the wind turbine is not operated and is exposed to a higher risk of condensation.

It is a main idea of the current disclosure to temper ambient air drawn into the nacelle by using sources or sinks of heat present in the nacelle to reduce the temperature difference between the ambient air and components in the nacelle of the wind turbine, in particular condensation-sensitive structures, like steel structures. These condensation-sensitive structures may be and/or be comprised by the part of the components. Condensation on these condensation-sensitive structures in the nacelle can be prevented by controlling the temperature difference between these structures and internal air/air flow. This control is based on temperature measurements and, preferably, also on relative humidity measurements. In particular, water content in the ambient air is accepted and condensation is prevented by controlling the temperature difference between air in the nacelle and structures in the nacelle. In particular, the exchange criterion may comprise the temperature difference being more than at least one threshold, in particular 10 to 12 K, for example 11 K. The threshold or thresholds - which may be different depending on which of the ambient air and the structures is warmer - applied here may be derived empirically and indicate the possibility of relevant exchange of heat. In particular, in embodiments, the threshold may be dynamically determined, for example taking into account measurements of relative humidity and/or other relevant parameters. However, in preferred embodiments, it may be sufficient to choose the threshold according to an approximation and/or empirically. 11 K (or 11° C) has proven to be a good approximative choice.

It is noted at this point, while condensation will mainly occur on cold surfaces of structures in warmer inflow ambient air, heating of inflow ambient air serves to keep the nacelle and its components generally warm for a longer time, in this manner preventing condensation-sensitive structures from getting cold for a longer time. In a second situation, cooling down the inflow ambient air leads to condensation where the heat is extracted, dehumidifying the inflow ambient air while, on the other hand, the temperature difference of air and condensation-sensitive structures is decreased, leading to less localized, strong condensation. Both effects hence serve the prevention of condensation on colder structures. Hence, in both cases, the property of components in the nacelle of being a heat source/storage and a heat sink is exploited to reduce condensation.

It is generally noted that the wind turbine may have a generally known structure comprising multiple wind turbine blades mounted to a rotor hub, which is coupled to a rotor of the generator in the nacelle. The nacelle may be located on top of a tower of the wind turbine. The wind turbine may be a direct-drive wind turbine. Furthermore, other components in the nacelle may also be cooled by the cooling system, for example electrical cabinets, converters, bearings and the like.

In an especially preferred embodiment, heat for tempering the inflow ambient air may be provided from or to the at least one transformer, in particular from or to oil in the transformer. In other words, energy stored in transformers may be used as source for heating the inflow ambient air, while the transformer as heat sink may also accept heat of the inflow ambient air during cooling. In embodiments, the at least one transformer of the wind turbine may comprise a large amount of oil having a high heat capacity. In embodiments, advantageous, a heat pump may be used between the preheating device and the transformer, in particular the transformer oil to further improve tempering options and efficiency.

In a concrete, advantageous embodiment, the cooling system may further comprise
- a liquid-cooling subsystem using a liquid coolant for cooling at least the transformer, comprising at least one pumping and/or distribution unit for the coolant, a cooling device for cooling the coolant, and coolant ducts forming a cooling circuit for the coolant, and
- a preheating device located in or directly downstream the inflow unit for heat exchange between the inflow ambient air and the liquid coolant,
wherein the control device controls the cooling system to use the preheating device to temper the inflow ambient air.

It is hence proposed to use the liquid-cooling subsystem, which may, for example, use water as a coolant, to transport heat between the transformer (and optionally other components) and the inflow unit. Heat stored in the transformer and transferred to the coolant may hence be transported to the preheating device, where it can be transferred to inflow ambient air. On the outer hand, heat from inflow ambient air may be transferred to the coolant in the preheating device and be transported to the transformer, where the respective reservoir exists, reducing temperature differences. In concrete embodiments, the preheating device may comprise a heat exchanger.

In a concrete example, if the wind turbine has just been shut down, heat remains stored in the transformer, in particular its oil. However, ambient temperatures may be very cold. Here, heat may be transferred to the coolant and actively used to warm inflow ambient air and to keep the temperature of the air and the structures in the nacelle high. On the other hand, for example if the wind turbine is not operated, if the nacelle, the transformer and other components are still very cold from night, the incoming ambient air temperature can be kept low by extracting heat energy from the inflow ambient air in the preheating devices, in particular also leading to condensation and hence reduction of humidity in the inflow ambient air. In particular, the preheating device will be cold and inflow ambient air will have a higher temperature. Here, another advantageous effect of the invention is provided, namely condensation occurring in the preheating device, lowering relative humidity of inflow ambient air. Preferably, the liquid-cooling subsystem may comprise a subcircuit comprising the preheating device and a heat exchanger to the transformer, in particular the transformer oil, wherein the control device controls the liquid-cooling subsystem to circulate coolant in at least, in particular only, the subcircuit. For example, the pumping and/or distribution unit for the coolant may be correspondingly controlled. Of course, such a subcircuit may also comprise a coupling to further components to be cooled in the vicinity of the transformer, for example at least one converter. However, even in this case, other devices and subcircuits of the liquid-cooling subsystem, which are not required for the described heat transfer, do not need to be operated, for example components to be cooled in operation, which are located elsewhere, expansion tanks and /or a cooling tower.

In embodiments, the nacelle may comprise at least two transformers, wherein a liquid-cooling subsystem and a respective preheating device are provided for each transformer and controlled by the control device to temper the inflow ambient air. Here, during control, temperature differences between both transformers and the like may also be taken into account.

In preferred embodiments, in particular in shutdown situations, in addition to tempering the inflow ambient air, at least one condensation-sensitive structure in the nacelle, in particular a steel structure, may also be tempered by controlling the cooling system, in particular to at least approximately match the temperatures of multiple condensation-sensitive structures. If the condensation-sensitive structure is part of or is a further component cooled by the cooling system, in particular the liquid-cooling subsystem, the respective configuration used in normal operation of the cooling system and known from the art may also be used to temper the respective condensation-sensitive structures. For other condensation-sensitive structures, respective cooling means can be provided. For example, for housing or stabilizing structures, cooling ducts may be provided in the liquid-cooling subsystem such that the structures may be flown through by the coolant. By heating condensation-sensitive structures, in particular steel structures, directly by coolant circulation, local temperature differences in the nacelle, which are too high may lead to condensation, can also be more reliably prevented. For example, some condensation-sensitive structures may be further away from the transformer (which may itself be or comprise a condensation-sensitive structure) and hence be substantially colder. By controlling the cooling system to rise the temperatures of condensation-sensitive structures, in particular steel structures, the control target, namely reduction and in particular even prevention of condensation, can be better realized.

The invention also concerns a wind turbine, comprising a nacelle with a cooling system, at least one transformer and a generator, wherein the cooling system comprises
- an air-cooling subsystem for cooling at least the generator, comprising an inflow unit for drawing inflow ambient air into the nacelle,
- temperature sensors for measuring the temperature of the ambient air and at least one temperature in the nacelle, and
- a control device for controlling the operation of the cooling system using the measured temperatures,
wherein the control device is configured to perform a method according to the invention.

All comments and features regarding the method according to the invention analogously apply to the wind turbine according to the invention, such that the same advantages can be achieved.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a wind turbine according to the invention,
- Fig. 2: a functional drawing of components in the nacelle of the wind turbine,
- Fig. 3: a flow chart of a method according to the invention,
- Fig. 4: a first possible flow of heat in a first situation, and
- Fig. 5: a second possible flow of heat in a second situation.

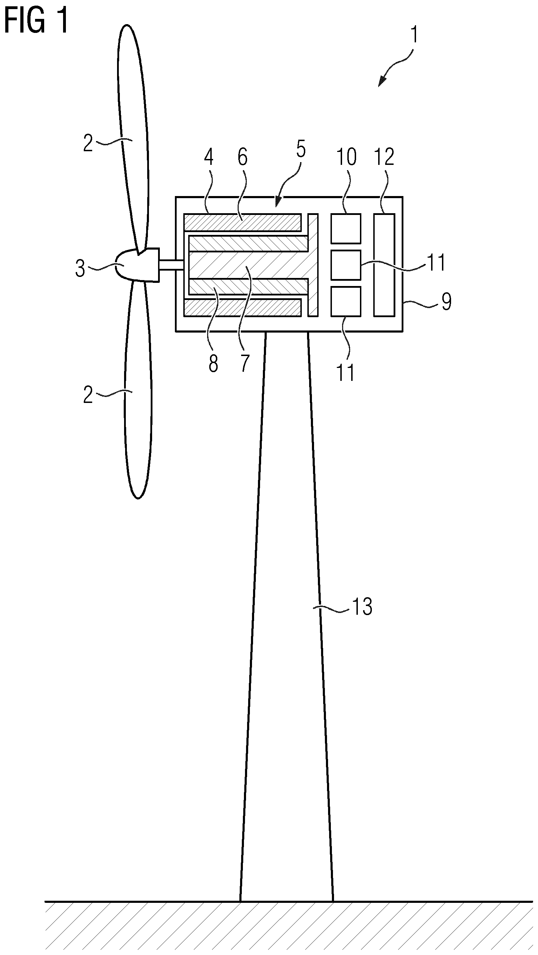

Fig. 1 is a schematic drawing of a wind turbine 1 according to the invention. The wind turbine 1 comprises multiple, in this case three, wind turbine blades 2 mounted to a rotor hub 3, which is coupled to an outer rotor 4 of a generator 5 of the wind turbine 1. In this case, the wind turbine 1 is a direct-drive wind turbine. In the generator 5, the outer rotor 4, which comprises at least one permanent magnet 6, rotates around an inner stator 7 having corresponding stator windings 8.

The generator 5 is housed in a nacelle 9, wherein also further components, for example a converter 10 and, in this case, two transformers 11, are located. Of course, the nacelle 9 will also house further components, for example electrical cabinets and power ducts connecting components.

The generator 5, the converter 10, the transformers 11 and further components in the nacelle 9 require cooling, such that the nacelle 9 further comprises a cooling system 12.

In this case, the mechanical power from the wind turbine blades 2 and the rotor 4 is converted into electrical power by the generator 5 and conditioned to be fed into a power grid by the converter 10 and the transformers 11. The connection to the power grid is achieved through a tower 13 carrying the nacelle 9.

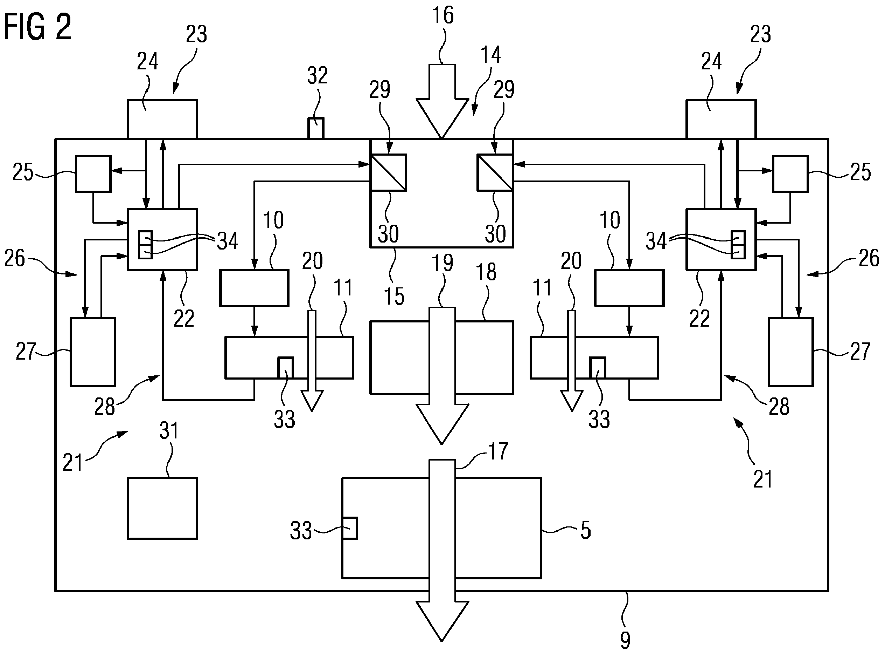

Fig. 2 shows a functional diagram of the cooling system 12 and some components which are cooled in the nacelle 9. The cooling system 12 comprises an air-cooling subsystem 14 having an inflow unit 15 to draw ambient air into the nacelle 9 according to arrow 16. The inflow unit 15 may, in some embodiments, comprise at least one filter and/or at least one dehumidifyer. The inflow ambient air is then, for example using blowers/ventilators, used to cool the generator 5, in particular by being drawn along overhang portions of the stator coils 8 and/or through the airgap between the rotor 4 and the stator 7, before again flowing out into the environment according to arrow 17. The inflow ambient air may also be used to cool further components 18, for example power ducts and/or electrical cabinets, according to arrow 19. While in the nacelle, the inflow ambient air, of course, also contacts further components in the nacelle, in particular (other) components comprising condensation-sensitive structures, as exemplarily shown for the transformers 11 by arrows 20.

For each transformer 11, in particular located at opposing lateral sides of the nacelle 9, the cooling system 12 further comprises a liquid-cooling subsystem 21 using a liquid coolant, for example water, to cool the transformers 11 and further components, including the converter 10. The liquid-cooling subsystems each comprise a pumping and/or distribution unit 22 to circulate the coolant through coolant ducts in respective subcircuits and/or to and from a cooling device 23, in this case a cooling tower 24, and/or an expansion tank 25. While one subcircuit 26 may be provided to cool components 27 in the front part of the nacelle 9, for example comprising a bearing of the rotor, another subcircuit 28 connects to heat exchangers (not shown) of the respective transformer 11 and converter 10. It should be noted at this point that, in particular if a segmented stator 7 is used, multiple converters 10 may be provided and split up for cooling between the liquid-cooling subsystems 21.

The subcircuit 28 also comprises a preheating device 29 in the inflow unit 15 having a heating exchanger 30 for heat exchange between the coolant in the subcircuit 28 and the inflow ambient air. It is noted that, additionally or alternatively, a heat pump may be provided between respective transformers 11 and preheating devices 29.

A control unit 31 is configured to control the operation of the cooling system 12, in particular based on data from temperature sensors 32, 33 and 34. Temperature sensor 32 measures the temperature of the ambient air outside the nacelle 9 and may also provide a measurement regarding relative humidity. Temperature sensors 33 measure temperatures at components in the nacelle, in particular at condensation-sensitive structures, in this example mainly steel structures. Temperature sensors 34, in this case mainly located in the pumping and/or distribution units 22, measure coolant temperatures, in particular at inflows and/or outflows of the coolant in the units 22.

While the control unit 31 is configured to control the usual operation of the cooling system 12 during normal operation of the wind turbine 1 in general, in this case, it is also configured for condensation prevention, in particular, when no electrical power is generated. Here, using the temperature values measured by the temperature sensors 32, 33 and/or 34, a temperature difference between the ambient air and condensation-sensitive structures in the nacelle 9 is determined and, if a exchange criterion is fulfilled, reduced using the preheating devices 29. In other words, the control device 31 is configured to perform a method according to the invention.

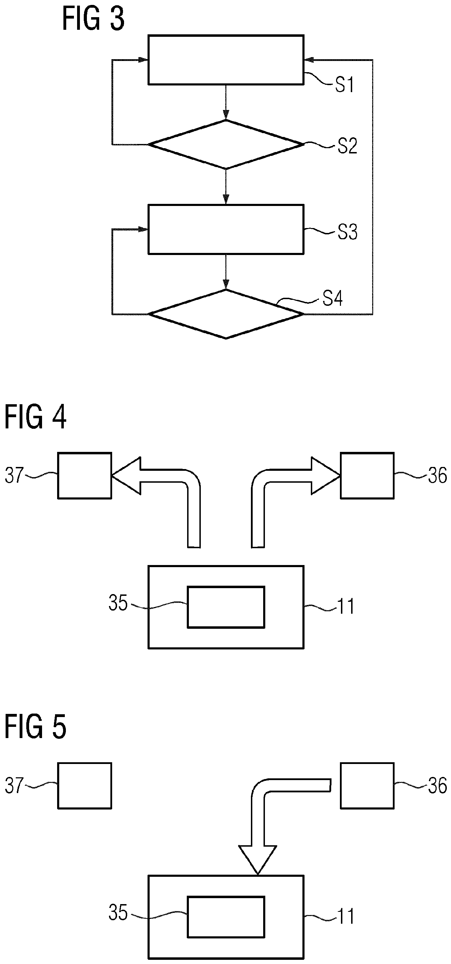

A flow chart of such a method according to the invention is shown in fig. 3. In a step S1, as already explained, the temperature difference between the ambient air and at least a part of the components in the nacelle, in particular their condensation-sensitive structures, is determined from the measured temperature values of the temperature sensors 32, 33, 34. In a step S2, the temperature difference is evaluated by an exchange criterion indicating exchangeability of heat between inflow ambient air and components in the nacelle 9, in particular the transformers 11. The temperature difference may be compared with a threshold. The threshold may be a fixed, empirically determined value, for example 11 K/11° C, but may also be determined, for example taking into account air humidity information from the sensor 32 or further sensors configured to provide air humidity information.

If the exchange criterion is not fulfilled, it is returned to step S1.

If, however, the exchange criterion in step S2 is fulfilled, in step S3, the cooling system 12 is controlled by the control device 31 to use the preheating devices 29 to reduce this temperature difference regarding the inflow ambient air. Here, coolant is circulated through subcircuit 28 since in particular the transformers 11, themselves comprising at least one condensation-sensitive structure, serve as heat reservoir. In particular, the oil comprised in the transformers 11 has a very high heat capacity. Hence, coolant circulating in subcircuit 28 can transfer heat from the transformer 11 to inflow ambient air via the preheating devices 29 and vice versa. In the particular in the first case, when the transformers 11 are still very warm compared to the ambient air, the liquid-cooling subsystem 21 may additionally be controlled to also heat further condensation-sensitive structures of other components in the nacelle 9 to keep the temperatures of all these condensation-sensitive structures high.

In step S4, it is checked whether the exchange criterion is still fulfilled or whether a stopping criterion is not fulfilled. If the stopping criterion is not fulfilled and/or the exchange criterion is still fulfilled, it is returned to step S3, else it is returned to step S1.

In any case, in step S3, the target of the control is to reduce or event prevent condensation inside the nacelle 9.

Figures 4 and 5 illustrate two cases. In the first case of fig. 4, the wind turbine 1 has been shut down a short time ago, such that the components in the nacelle 9, in particular the transformers 11, are still hot. Hence, to reduce the temperature difference between inflow ambient air and condensation-sensitive components, heat from the transformer 11, which comprises at least one condensation-sensitive structure 35 itself, is transferred to the inflow ambient air 36 via preheating devices 29. In this manner, the air inside the nacelle 9 stays warm. Furthermore, heat is transferred to other condensation-sensitive structures 37 which have already further cooled down, all in all keeping the nacelle 9 and its components warmer for a longer time and preventing condensation.

Fig. 5 concerns a second situation wherein the condensation-sensitive structures 35, 37 are colder than the ambient air 36. In this case, heat is transferred from the ambient air 36 to the transformer 11, reducing the temperature difference. In this second situation, the preheating devices 29, in particular the heat exchangers 30, are also cold, such that condensation will appear in the preheating devices 29, reducing relative humidity well before the inflow ambient air enters the nacelle, reducing condensation. Localized condensation on cold structures 35, 37 is also reduced due to the reduced temperature difference between the air and the structures 35, 37.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for operating a cooling system (12) in a nacelle (9) of a wind turbine (1), wherein the wind turbine (1) comprises a generator (5) and at least one transformer (11) located in the nacelle (9), wherein the cooling system (12) comprises
- an air-cooling subsystem (14) for cooling at least the generator (5), comprising an inflow unit (15) for drawing inflow ambient air (36) into the nacelle (9),
- temperature sensors (33, 34, 35) for measuring the temperature of the ambient air and at least one temperature in the nacelle (9), and
- a control device (31) for controlling the operation of the cooling system (12) using the measured temperatures, **characterized in that**, by the control device (31),
- a temperature difference between the ambient air and at least a part of the components in the nacelle (9) is determined from measured temperature values of the temperature sensors (33, 34, 35), and
- if the temperature difference fulfils an exchange criterion indicating possible exchange of heat between the inflow ambient air (36) and at least one of the components in the nacelle (9), the cooling system (12) is controlled to temper the inflow ambient air (36) by exchanging heat between the at least one of the components in the nacelle (9) and the ambient air to reduce the temperature difference.

2. Method according to claim 1, **characterized in that** the exchange criterion comprises the temperature difference being more than at least one threshold.

3. Method according to claim 1 or 2, **characterized in that** heat for tempering the inflow ambient air (36) is provided from or to the transformer (11), in particular from or to oil in the transformer (11).

4. Method according to one of the preceding claims, **characterized in that** the cooling system (12) further comprises
- a liquid-cooling subsystem (31) using a liquid coolant for cooling at least the transformer (11), comprising at least one pumping and/or distribution unit (22) for the coolant, a cooling device (23) for cooling the coolant, and coolant ducts forming a cooling circuit for the coolant, and
- a preheating device (29) located in or directly downstream the inflow unit (15) for heat exchange between the inflow ambient air (36) and the liquid coolant,
wherein the control device (31) controls the cooling system (12) to use the preheating device (29) to temper the inflow ambient air (36).

5. Method according to claim 4, **characterized in that** the preheating device (29) comprises a heat exchanger (30).

6. Method according to claim 4 or 5, **characterized in that** the liquid-cooling subsystem (21) comprises a subcircuit (28) comprising the preheating device (29) and a heat exchanger to the transformer (11), in particular the transformer oil, wherein the control device (31) controls the liquid-cooling subsystem (21) to circulate coolant in at least the subcircuit (28).

7. Method according to any of the claims 4 to 6, **characterized in that** the nacelle (9) comprises at least two transformers (11), wherein a liquid-cooling subsystem (21) and a respective preheating device (29) are provided for each transformer (11) and controlled by the control device (31) to temper the inflow ambient air (36).

8. Method according to one of the preceding claims, **characterized in that**, in particular in shutdown situations, in addition to tempering the inflow ambient air (36), at least one condensation-sensitive structure (35, 37) in the nacelle (9), in particular a steel structure, is tempered by controlling the cooling system (12), in particular to at least approximately match the temperatures of multiple condensation-sensitive structures (35, 37).

9. Method according to one of the preceding claims, **characterized in that** the tempering of the ambient air depending on the temperature difference is, in particular only, performed when the wind turbine (1) is shut down, in particular not converting mechanical power from wind into electrical power by the generator (5).

10. Wind turbine (1), comprising a nacelle (9) with a cooling system (12), at least one transformer (11) and a generator (5), wherein the cooling system (12) comprises
- an air-cooling subsystem (14) for cooling at least the generator (5), comprising an inflow unit (15) for drawing inflow ambient air (36) into the nacelle (9),
- temperature sensors (33, 34, 35) for measuring the temperature of the ambient air and at least one temperature in the nacelle (9), and
- a control device (31) for controlling the operation of the cooling system (12) using the measured temperatures, **characterized in that** the control device (31) is configured to perform a method according to one of the preceding claims.
